# EUROPEAN PATENT APPLICATION

(11) **EP 4 725 624 A1**
(43) Date of publication of application: **15.04.2026**
(21) Application number: 24461627.2
(22) Date of filing: 14.10.2024
(51) Int. Cl.: B22F 9/04, B22F 10/85, B22F 10/73, B22F 9/00, B22F 9/08, B22F 8/00, C22C 1/04

(54) **METHOD OF ATOMIZATION OF POWDERED FEEDSTOCK AND DEVICE FOR ATOMIZATION OF POWDERED FEEDSTOCK**

(71) Applicant: AMAZEMET SPOLKA Z OGRANICZONA ODPOWIEDZIALNOSCIA, 00-867 Warszawa (PL)
(72) Inventor: ZRODOWSKI, Lukasz, 02-647 WARSZAWA (PL)
(74) Representative: Bury & Bury

(57) **Abstract**

A method of atomization of powdered feedstock material (**104**), comprising the following steps, performed simultaneously and/or alternately: the step of subjecting said powdered feedstock material (**104**) to melting by heating it with a focused heat source (**140**) to obtain a melt pool (**106**) of liquid feedstock material (**104**) on a tip (**105**) of an ultrasonic element (**101**); the step of subjecting the melt pool (**106**) to ultrasonic vibrations by means of the vibrating ultrasonic element (**101**); the step of feeding the powdered feedstock material (**104**) to the melt pool (**106**) in the first stream (**114**) impinging the melt pool (**106**) and comprising a carrier gas and the powdered feedstock material (**104**) suspended in said gas. According to the invention, the ultrasonic element (**101**) is cooled and in the step of subjecting the melt pool (**106**) to ultrasonic vibrations, the ultrasonic vibrations are induced in the melt pool (**106**) by means of the ultrasonic element (**101**), causing the melt pool material (**106**) to be ejected as an atomization product (**254**). The heating profile (**514**) of the focused heat source (**140**) and/or the cooling profile of the melt pool (**106**) and/or the gas blowing profile onto the melt pool (**106**) and/or the feed rate of the feedstock material (**104**) are selected so that the melt pool (**106**) is concave in shape and has two regions, including a shallower region (**106a**) in which the ultrasonic atomization rate exceeds the feed rate of the feedstock material and a deeper region (**106b**) in which the feed rate of the feedstock material exceeds the atomization rate. The atomization product (**254**) ejected from the melt pool (**106**) is collected using the second gas stream (**124**). The invention also provides a device (**100**) for atomization of the powdered feedstock material using the method according to the invention.

## Description

### Field of invention

The subject of the invention is a method of ultrasonic atomization of powdered feedstock material and a device for atomization of powdered feedstock material.

### State of the art

The prior art knows solutions that use ultrasonic frequency vibrations to atomize liquid metals. Typically, the ultrasonic system is stimulated by a piezoelectric or magnetostrictive transducer. Powders resulting from atomization are used in many fields, including the chemical industry and 3D printing.

In the 3D printing process, the metal powder applied to produce the object is only partially used. Unused powder is collected and re-applied. After repeated application, this powder degrades due to the change in morphology and surface oxidation.

Powdered metals are also used in plasma cladding and laser cladding, i.e. techniques used to cover objects with metals. The prior art knows numerous solutions for cladding using an electric arc and laser radiation. In these solutions, a focused heat source is used, such as a plasma arc or a laser beam, together with a nozzle generating a gas stream in which the powder is suspended. This powder is supplied to the coated object in a molten or partially molten form and when it comes into contact with the object, it melts into it due to the fact that the object is heated locally by a heat source at the place where the powder is applied. After cooling, a metal film permanently bonded to the object is obtained. Cladding is also often used as a 3D printing technique for metal objects. Laser and plasma cladding with ultrasound assistance is also used, as shown, for example, in Mohsan, Aziz Ul Hassan, et al. "State-of-the-art review on the Ultrasonic Vibration Assisted Laser Cladding (UVALC)." Journal of Manufacturing Processes 107 (2023): 422-446.

From the publication WO2022034517, an ultrasonic system designed for high temperature operation is known, comprising one or more ultrasonic transducers, having a waveguide that is placed orthogonal to the axis of one or more ultrasonic transducers, and made of a fiber composite.

The laser atomization method is presented in S. Habib Alavi et al. "Ultrasonic vibration-assisted laser atomization of stainless steel," Powder Technology 2017 and S. Habib Alavi et al, "Melt expulsion during ultrasonic vibration-assisted laser surface processing of austenitic stainless steel," Ultrasonics 2015. Atomization occurs by spraying the sonotrode material melted by a laser beam. In this case, the laser acts as a heat source used for laser melting, and the mechanical energy is supplied by means of a sonotrode excited by a piezoelectric transducer. This document identifies the problem of pitting and destruction of the sonotrode due to so-called static beam drilling. Laser melting is understood as the phase transition of the processed material from a solid to a liquid under the influence of laser radiation, even if it is accompanied by additional effects, e.g. chemical decomposition of the material, evaporation or boiling of the material. A known unfavorable phenomenon is the formation of a vapor channel inside the melt pool of material melted by the laser, where the material evaporates, while the edge of the melt pool of material remains in a liquid state.

From the publication EP4000763, an ultrasonic metal atomizer is known, comprising a piezoelectric transducer, an ultrasonic signal generator and an elongated, consumable sonotrode subjected in the working chamber to the action of a movable and electronically controlled heat source for melting the material to be atomized. An electron gun or alternatively a laser is indicated as the heat source. The heat source is moved along the consumable sonotrode.

Publication US3275787 discloses the use of an electron beam to melt vibrating metal in a vacuum chamber. Six systems are described using a heat source in the form of an electron beam and a vibrating element used in the atomization process.

Publication US2024131585A1 discloses a method and apparatus for forming powder. The formed powder may comprise a powder alloy that may be used in additive manufacturing and powder metallurgy to create structures. A feedstock of a first material composition is melted by a laser and fed to a vibrating substrate structure. The substrate has a second material composition. As a result of the vibrations, a powder is obtained in which a portion of the substrate material is selectively added to the molten feedstock material, so that the powder has a different material composition than the first material composition. The feedstock material may be powdered.

The publication US2024139818A1 describes the use of a laser source for ultrasonic atomization. A typical 3D metal printing system is used with typical 3D printing heat source parameters selected to heat and melt a small area and to use small vibration amplitudes. In such systems, it is difficult to control the cut of the powder obtained and it is difficult to use them effectively.

Ultrasonic processing of feedstock materials subjected to heat treatment involves numerous challenges due to changes in the mechanical properties of vibrating materials with the operating temperature. In the prior art, solutions are known for cooling ultrasonic elements, the so-called sonotrodes, and making them from materials providing some forms of thermal insulation. Examples include the solutions disclosed in documents JPH02121830, US11938557B2, EP4000763, PL237650B1 or PL424870. In the case of ultrasonic atomization, there are more limitations. The feedstock material fed to the sonotrode melts and forms a melt pool. The melt pool is a dynamic structure; on the one hand, it is affected by a heat source and the recoil of vapors resulting from evaporation (a keyhole), and on the other hand, the melt pool tends to gather into a droplet under the influence of the liquid's surface tension - in a manner dependent on the material interactions between the melt pool and the substrate. When exposed to ultrasound, material sometimes ejects from the melt pool. Ultrasonic atomization is possible below the critical melt pool depth, because a deep melt pool attenuates the ultrasonic wave. This means that, with poorly selected process parameters, the sonotrode surface is "flooded", i.e. a drop of liquid metal is formed on it, which does not atomize despite exposure to ultrasound.

Examples of ultrasound-assisted 3D printing are known from scientific publication: Todaro, C. J., et al. "Grain refinement of stainless steel in ultrasound-assisted additive manufacturing," Additive Manufacturing 37 (2021): 101632.

From the publication CN206253650U, a mechanism for feeding powder from a nozzle onto a vibrating substrate heated by a laser in the 3D printing process is known.

From the publication WO2023214214A1, a gas atomization technique of a material melted by a laser is known.

In the publication WO2012148714A1, the use of a head of the type used in plasma spraying in titanium atomization is disclosed. Shielding gas and powder are fed from the moving head from nozzles surrounding the plasma torch generating an electric arc known from the document US2006/0185473. The document discloses that the powder is fed to a melt pool of molten titanium in a stream heated by the plasma torch. The melt pool of depth from 3.175 mm (1/8 inch) to 6.35 mm (1/4 inch) is subjected to the action of a gas stream causing atomization, and because the melt pool is not constrained, the material is blown away by a high-velocity gas flow. Optionally, the possibility of exciting the substrate with ultrasound to achieve atom ization is indicated, but it is not specified how to ensure proper operation of the vibrating elements at a temperature close to the melting point of the powder.

Other patent documents relating to ultrasonic atomization and sonotrodes for high temperature operation, are also known but none of them discloses efficient processing of the feedstock material in the form of a powder. US2004124745, CN110666183, CN209792610, CN110465672, EP2832456, GB952042, EP0689774, JPS59189042, CN1422718, DE2656330, US2889580, US3275787, US3,833,163, US2012216576, GB1594977, US3682459, JP2002096024, CN106835006, CN102935742, CN201305623, CN102554195, US8844897, JP2011177787, CN104384483, JP5570883, JPH04305279, US376236, CN106795583, CN201713563, JPH09220661, JPH02121830, JPH05427, JP2011051007, CH707125, JPS5925904A, WO2012148714, JP2003138303, EP1238715, EP0434980, JPS59211571, KR101764289, CN107138733, JPH01191707, US5198157, CN105855558, CN107900364, CN202169374, US4981425, EP1238715, CN103433499, US4473187A, GB1150506, US2488353, US2889580, DE3032785, CN101332513, CN102935742, US7820249, JPH0911199, JPH09294744, CN107848024, CN102554195, CN110421178, CN110395739, CN110303162, CN209407418, CN209407418, CN110076346, CN109622982, EP1245315, JPH0949007, JPH0949007, RU2714001, CN209849886, CN20984988, CN110355377, CN110666183, WO2020006062, CN109967752, CN109622980, CN107876787, CN204504226, US4798332, US4412505, US4473187, US4402458, US4799622, DE2137083, SU695691, US6247525, JPH08100205, CN201832965, CN105855487, CN109622906, SU850301, CN2776571, CN201538802, CN107306372, US4307128, CN201208649, CN105665730, WO2008080888, US5653346, US5171387, SU1715500A1, SU1715501A1, SU1715502A1, JPH02212097, GB2282559, GB2248795, GB2270025, GB2325192, DE10353804, JPH07132493, WO2017154113, JP2007307632, CN101966661, CN103071613, CN104550875, US8459122B2, JPH11128836, WO2018168288, JP2004033948, DE602004004488T2, EP1250972, DE3106711, SU695691A1, RU2577582C1.

### Problem to be solved

The atomization process according to WO2012148714A1 was not carried out effectively by the inventor of the present invention. The melt pool of the depth postulated in WO2012148714A1 could not be stimulated to vibrations causing atomization, and after changing the process parameters to obtain a shallower melt pool, material losses increased significantly. There are currently no available atomization methods that are able to use powder directly, in particular titanium powder and its alloys, as a feedstock material. Powder recycling is currently carried out by returning it to the primary metallurgical processes, which is associated with high costs of processes and logistics of flammable powder. At the same time, attempts to atomize powdered feedstock material using methods known from the prior art turned out to be troublesome in terms of controlling powder parameters, in particular they did not allow the process to be carried out continuously while maintaining a high degree of feedstock material conversion and process efficiency.

### Summary of the invention

The method of atomization of powdered feedstock material according to the invention comprises the following steps performed simultaneously or alternately: the step of subjecting said powdered feedstock material to melting by heating it with a focused heat source to obtain a melt pool of liquid feedstock material on a tip of an ultrasonic element, the step of subjecting the melt pool to ultrasonic vibrations by means of the vibrating ultrasonic element, the step of feeding the powdered feedstock material to the melt pool in the first stream containing a carrier gas and the powdered feedstock material suspended in said gas. This stream impinges the melt pool. According to the invention, the ultrasonic element is cooled and used to excite ultrasonic vibrations in the melt pool, causing the atomized material to be ejected. Cooling is an important factor, because the properties of ultrasonic elements change with temperature, and in the case of using ultrasound in atomization at an intensity causing ejection of material droplets, the characteristics of the produced powder depend on the intensity and frequency of vibrations. In addition, the parameters of: heating using the focused heat source and/or cooling the melt pool and/or blowing gas onto the melt pool and/or the feed rate of the feedstock material are selected so that the melt pool is concave in shape and has two regions, including a shallower region in which the ultrasonic atomization rate exceeds the feed rate of the feedstock material and a deeper region in which the feed rate of the feedstock material exceeds the atomization rate. Such a shape of the melt pool allows both controlled atomization and effective collecting of the feedstock material in powdered form, with sufficiently high efficiency. The atomization product ejected from the melt pool is collected using the second gas stream.

Preferably, a blend of powders of different chemical composition is used as the feedstock material and the alloying of these substances takes place in the melt pool, while the alloy is subjected to atomization.

Preferably, the atomization is carried out in an atmosphere with reducing properties.

Preferably, the depth of the shallower region of the melt pool is less than 2 mm and the depth of the deeper region of the melt pool is greater than 3 mm.

Preferably, the first stream is directed at an angle of 30° to 80° with respect to the second gas stream.

Preferably, the first stream is formed by a set of nozzles directed at different angles.

Preferably, a plasma source or a laser source is used as the focused energy source.

Preferably, the power of the focused heat source is set to be greater than the heat flux passing from the tip to the ultrasonic element at the temperature of the tip equal to the melting point of the feedstock material.

Preferably, the focused heat source supplies energy distributed over an area of at least 60% of the surface of the tip of the ultrasonic element, and the maximum of the density function of the supplied energy is set in the shallower region of the melt pool.

Preferably, the powdered feedstock material suspended in the first stream is heated before being supplied to the melt pool.

Preferably, the melt pool on the tip of the vibrating element is constrained on the sides by a cooled base. Such a configuration makes it easier to provide a cooling profile of the melt pool from the outside of the melt pool and also prevents the melt pool from spilling beyond the surface of the tip of the ultrasonic element. Additional cooling of the edge of the melt pool makes it easier to provide a concave depth profile of the melt pool. The cooling profile can also be controlled by using materials of different thermal conductivity between the tip of the ultrasonic element and its body.

A device according to the invention for atomization of powdered feedstock material by means of ultrasound comprises an ultrasonic source, an ultrasonic element connected to the ultrasonic source, and a focused heat source adapted to locally heat and melt the feedstock material and form a melt pool on the surface of the tip of the cooled ultrasonic element. The device further comprises a working chamber in which at least partially the ultrasonic element connected to the ultrasonic source is located, and a system for feeding the powdered feedstock material to the ultrasonic element in the form of the first stream. According to the invention, the device comprises a cooling system for the ultrasonic element. According to the invention, the device is further provided with a gas outlet providing the second stream of carrier gas. The nozzle and the gas outlet are oriented such that the first stream and the second stream are directed crosswise to each other. According to the invention, the device further comprises a system for controlling the power of the focused heat source, a system for controlling the rate of the first stream and the rate of powder feeding. These systems are configured such that the melt pool is concave in shape and has two regions, including a shallower region in which the ultrasonic atomization rate exceeds the feed rate of the feedstock material and a deeper region in which the feed rate of the feedstock material exceeds the atomization rate.

Preferably, the device comprises a cooled base extending above the surface of the tip of the sonotrode.

Preferably, the device comprises a central unit connected to the system for controlling the power of the focused heat source and to the system for controlling the rate of the first stream and adapted to send control signals thereto.

Preferably, the ultrasonic element comprises a vibrating body and a tip insulated from the vibrating body using a material with lower thermal conductivity than the material of the body of the ultrasonic element. In this way, a so-called thermal barrier is obtained. The introduction of the thermal barrier facilitates shaping the temperature profile and the melt pool depth profile, and at the same time facilitates independent cooling of the body of the ultrasonic element, limiting the effect of shaping the heating profile on its ultrasonic properties. A vibrating element may also be used consisting of at least two materials with different thermal conductivity, wherein the material with lower thermal conductivity is closer to the melt pool and the material with higher thermal conductivity is further away from the melt pool.

Preferably, the ultrasonic element is made of at least two materials with different thermal conductivity, wherein the material with lower thermal conductivity is closer to the tip and the material with higher thermal conductivity is further away from the tip, wherein the material in direct contact with the melt pool has a melting point higher than the feedstock material. Sandwich structures work well in which two layers with higher thermal conductivity are separated by a layer with significantly lower conductivity. For example, a sonotrode with a sandwich structure having molybdenum on top, TiNb alloy below and molybdenum again below can be used for atomization of titanium.

Preferably, the cooled base is in contact with the ultrasonic element, to provide thermal contact of the base tip and with the melt pool, which facilitates shaping the temperature distribution in the melt pool.

### Advantageous results of the invention

The invention solves the problem of ultrasonic atomization of powdered feedstock material by providing a suitable melt pool shape with a nonhomogeneous concave depth profile and division into regions that perform the function of catching the feedstock material and regions that perform the function of atomizing the liquid material, while at the same time there is a transport of liquid from regions that do not atomize to regions that atomize creating a state of dynamic equilibrium.

A big problem in ultrasonic atomization is the good balance of the feed rate of the material to be atomized and the atomization rate over the entire area subjected to ultrasonic and thermal treatment. Typically, the feedstock material is fed in the form of a wire fed into the melt pool at a specific rate, which is impossible for powder. Melting the material above the melt pool and introducing it into the melt pool in the form of large drops often causes splashes and inhomogeneities. This can be avoided by introducing the material in powdered form, but then it is difficult to ensure process continuity, a high degree of conversion of the feedstock material, and process efficiency at the same time, and also to separate the feedstock material from the powder resulting from atomization.

The method according to the invention solves this problem by shaping the melt pool depth profile so that a part of it does not atomize the material, but effectively receives the powdered feedstock material. An additional improvement is achieved by increasing the melt pool area.

It turned out that shaping the melt pool depth profile in the presence of ultrasound is easier, because in the presence of ultrasound, the processes affecting the maintenance of thermodynamic equilibrium in the melt pool are faster.

### Description of the drawing

The subject of the invention is shown in embodiments in the drawing, in which Fig.1 shows a block diagram of the device according to the invention, Fig. 2a shows the size distribution of the feedstock material and the product obtained as a result of atomization in the first embodiment of the method according to the invention, Fig. 2b shows the size distribution of the feedstock material and the product obtained as a result of atomization in the second embodiment of the method according to the invention, Fig. 2c shows the size distribution of the feedstock material and the product obtained as a result of atomization in the third embodiment of the method according to the invention, Fig. 3a shows a schematic representation of the use of a plasma nozzle with integrated powder supply in accordance with an embodiment of the invention, Fig. 3b shows a schematic representation of the melt pool profile during the process, Fig. 4 shows the use of a laser source in accordance with the invention, and Fig. 5 illustrates the shaping of the melt pool profile in accordance with an embodiment of the invention using a heat source with a Gaussian intensity profile.

### Preferred embodiments of the invention

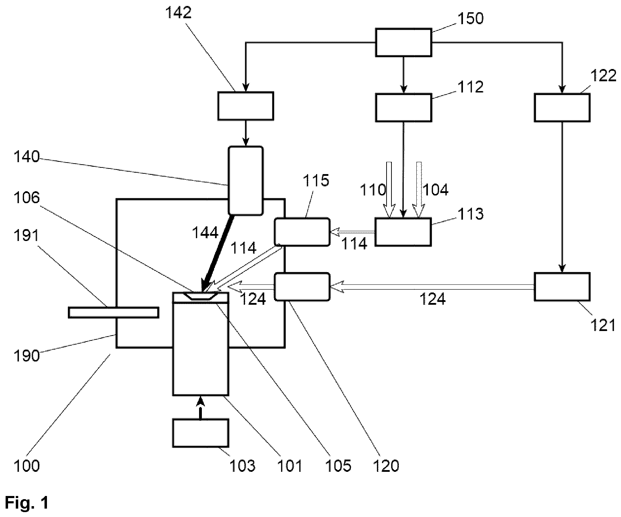

The method according to the invention can be easily carried out by means of an atomization device, the block diagram of which is shown in Fig. 1.

In the first embodiment of the invention, the powdered feedstock material **104** is a Ti6Al4V alloy powder with a particle size between 200 µm and 500 µm obtained earlier as a waste from an ultrasonic atomization process. Any powder that can be entrained in a gas stream, including a blend of different powders, can be used as the feedstock material **104.** It is particularly advantageous as it allows use a powder with a size that makes it traditionally waste from other processes, or powder having non-spherical morphology. This material is simultaneously subjected to ultrasonic vibrations by means of an ultrasonic vibrating element **101,** which in the present embodiment is a sonotrode with a working tip **105.** The ultrasonic element is excited to vibrate by means of an ultrasonic source **103,** which is an ultrasonic transducer with a capacitance of 5.6 nF and a nominal frequency of 40 kHz.

Other transducers can be used, the general rule being that the higher the vibration frequency, the finer the powder obtained by atomization. The second parameter that influences powder size is amplitude, the general rule being that the size of powder particles increases with
amplitude as described in Wisutmethangoon, Sirikul, Thawatchai Plookphol, and Phairote Sungkhaphaitoon, "Production of SAC305 powder by ultrasonic atomization." Powder Technology 209.1-3 (2011): 105-111.

The ultrasonic element **101** being the sonotrode was realized as a cylinder 71 mm long and 30 mm in diameter made of a molybdenum alloy and tuned to a frequency of 40500 kHz at room temperature. The sonotrode **101** was cooled in a section distant from the melt pool, starting 30 mm from its working tip **105.** The sonotrode **101** was mounted in a 15 mm thick copper cooled base **292** in such a way that the surface of the tip **105** was located 4 mm below the surface of the cooled base **292.** Vibrations with an amplitude of 20 micrometers were used, constituting a compromise between the atomization rate and the size of the atomized particles. The known effect is that the higher the vibration amplitude, the thicker the droplets that are ejected out of the melt pool, the deeper the melt pool that can be atomized and the faster the atomization. The atomization effect was effectively achieved at vibration amplitudes above 10 µm. The person skilled in the art is able to propose other sonotrodes selected appropriately for the atomized material.

In order to maintain mechanical properties, the sonotrode **101** was subjected to water cooling in its part distant from the melt pool, located below the tip **105** in a manner analogous to that disclosed in document WO2020230027A1.

In the present embodiment, a plasma source was used as the heat source **140,** which provides an energy beam **144** in the form of a plasma arc formed by a plasma nozzle (not shown in the drawing). Plasma nozzles are known and used in the plasma welding process. A focused heat source should be understood as providing an energy beam that can be focused on the tip of the ultrasonic element - in particular a plasma arc or a laser beam. The diameter of the plasma nozzle was 4 mm and the plasma-forming gas was argon at a feed rate of 5 l/min, the distance from the nozzle outlet to the surface of the vibrating element was 50 mm. The larger the diameter of the plasma nozzle, the wider the area covered by the arc **144** and the lower the velocity of the plasma-forming gas. The powder nozzle **115** was equipped with one channel 2 mm in diameter, feeding the first stream **114** of feedstock material **104** suspended in the carrier gas **110,** which was argon, from a powder feeder **113.** The plasma arc current was 250 A at a voltage of 52 V, i.e. the thermal power of the arc was 13 kW. These are voltage parameters at the upper limits used in welding processes, but it is also possible to use process parameters with much higher current and voltage for processing high-melting materials. The farther the plasma source **140** is from the sonotrode, the better, because there is less chance of contamination with atomized material, but also a higher voltage required to maintain the plasma arc **144.** The powder feeder is equipped with a control system **112** for setting the rate of the first stream **114** and the powder content. In manual implementation, this system may consist of ordinary gas and powder metering valves.

Using the energy beam **144** from the focused heat source **140,** a melt pool **106** of liquid feedstock material **104** was created on the tip **105** of the ultrasonic element **101.** Then, the powdered feedstock material **104** was fed to the melt pool **106** in the first stream **114** impinging the melt pool **106** in a continuous process.

The proportions of the carrier gas **110** and the powdered feedstock material **104** in the mixture constituting the stream **114** were set in such a way that the feed rate of the carrier gas was 8 l/min and the feed rate of the feedstock material was 10 g/min. The powder nozzle **115** was directed at an angle of 30° with respect to the axis of the sonotrode **101,** the distance of the nozzle from the center of the sonotrode was 40 mm. The feed rate of the powdered feedstock material **104** was selected so as to obtain a dynamic balance of the feeding process and the atomization process. Too much gas flow blows out the melt pool, reducing the efficiency of the process, and too little gas flow in relation to the powder flow causes clogging of the powder nozzle **115** or uneven powder flow and pulsations in the feed.

The sonotrode **101** was cooled by a flowing coolant at a temperature of 297 K, 30 mm from the tip **105.** The tip **105** operates at the melting temperature of the material, i.e. 1878 K, due to which the temperature gradient at 30 mm of the sonotrode height is 1581 K, and the power collected by the coolant is 6.5 kW, which is consistent with the increase in the coolant temperature after passing through the cooling system of the sonotrode **101.** In a preferred embodiment of the invention, a sonotrode with a thermal insulator separating its tip **105** from its body is used, which reduces the heat collection by the sonotrode. This makes it possible to reduce the power of the heat source and increase the efficiency of the process.

The plasma nozzle coupled to the plasma source **140** was directed at an angle of 45° with respect to the axis of the sonotrode **101** and placed directly 10 mm above the powder nozzle **115.** With the aforementioned arc parameters used in the present embodiment, the width of the plasma arc **144** above the working tip **105** was close to the diameter of the sonotrode, i.e. 30 mm, and the power density distribution delivered to the sonotrode surface had a Gaussian distribution with a maximum in the sonotrode center. The plasma arc **144** may be static or moved manually or automatically. The movement of the plasma arc may be achieved by changing the parameters of the plasma source **140** or by moving the plasma nozzle, with moving the plasma nozzle being the easiest to implement. Moving the plasma nozzle of the plasma source changes the power density delivered to the working tip surface **105** and it has been observed that circular movements of the plasma nozzle with an amplitude of several mm positively affect the stability of the atomization process. The angle of the plasma nozzle with respect to the sonotrode axis is adjusted in such a way that the closer it is to 0°, the more heat is supplied, and the closer it is to 90°, the more the atomized powder is directed towards the collector **191.**

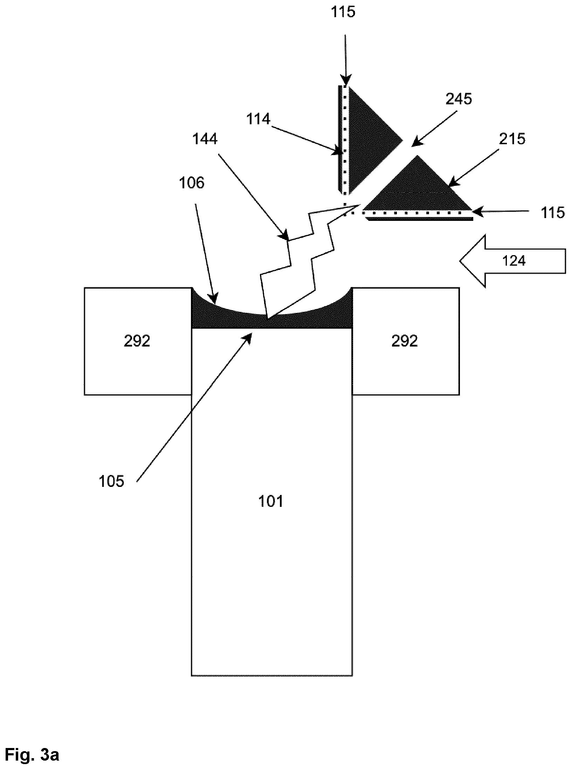

A melt pool **106** having a substantially circular cross-section with a diameter of 30 mm was obtained. The depth profile of the melt pool **106** was concave and two regions **106a** and **106b** could be distinguished in it. In the shallower region **106a,** the depth of the melt pool **106** was 0.5 mm at its minimum. In the deeper region **106b,** the average depth of the melt pool was 3 mm. The depth of the melt pool was examined after the melt pool had solidified and by image analysis with reference to the sonotrode penetration into the cooled base, taking int account that the deeper region **106b** abuts against the cooled base **292** and surrounds the shallower region of the melt pool **106a.** The base **292** is shown in Figs. 3A, 3b, 4 and 5.

The use of the base **292** limiting the melt pool makes it easier to force the proper depth profile and temperature distribution. The use of the cooled base **292** extending above the surface of the sonotrode tip **105** causes the melt pool material at the edges of the sonotrode **101,** which is in contact with the cooled base **292,** to be better cooled than the melt pool material in the center of the sonotrode **101.** The surface tension and viscosity of most liquid metals and alloys decreases with increasing temperature, therefore the better cooled material at the edges of the sonotrode tends to collect in a thicker layer (corresponding to a drop with a higher wetting angle), which additionally forces the melt pool to be concave. Additionally, an effect may occur in which the bottom of the melt pool **106** in contact with the cooled base **292** solidifies, creating an additional barrier and raising the edges of the melt pool **106** above its center. An analogous effect occurs in the case of using a thermal insulation layer in the sonotrode **101.** The heat from the central part of the melt pool **106a** is mainly collected by the sonotrode **101,** which, in the case of using thermal insulation, has a much lower heat collection capacity than the cooled base **292.** This causes the central part of the melt pool **106a** to be additionally overheated, the viscosity and surface tension of the liquid decrease, which reduces the depth of the melt pool and additionally facilitates the atomization process, because the ultrasonic atomization process is faster for lower viscosity and surface tension of the atomized liquid. The base **292** also constitutes a barrier to the spreading of the melt pool **106** beyond the tip **105.** The lack of the cooled base **292** discussed in the following embodiments causes the material from the deeper part of the melt pool **106b** to flow away as waste, slightly reducing the degree of conversion. However, it is still higher than in the case of powder atomization solutions known in the art.

Ultrasonic atomization occurs in the shallower region **106a,** from which material is removed in the form of atomized droplets. Due to the concave depth profile of the melt pool **106,** the loss of material from the shallower region **106a** is replenished from the deeper region **106b.** At the same time, it surprisingly turned out that the deeper region absorbs falling particles and droplets of the feedstock material **104** more easily. This effect was particularly intense in places where the depth was 3 mm. In turn, atomization was easily achieved at depths of less than 2 mm.

The atomized material ejected upwards from the melt pool is collected by means of the second stream **124** of carrier gas, in this embodiment argon, carrying the atomization product to the collector **191.** In this embodiment, the second stream of carrier gas **124** is generated by means of a nozzle **120** being an outlet to the working chamber. This stream can alternatively be generated by applying a vacuum and sucking the gas at the collector **191.**

Experiments have shown that the method is conveniently carried out over a wide range of angles of the stream **114** with respect to the axis of the ultrasonic element **101.** Well performing depth profiles of the melt pool **106** have been achieved in the range of 30° to 80°. A wider range of angles is possible, although then it may be justified to use the third stream (not shown) of inert gas directed from above onto the melt pool **106** and dedicated solely to shaping the melt pool. The angle of incidence of the stream **114** is primarily dependent on the position of the powder nozzle **115** and the flow of gas **110** entraining the feedstock material, and to a lesser extent on the position of the carrier gas nozzle **120** and the gas flow through this nozzle. In the case of using a plasma source with a plasma nozzle as the heat source **140,** the location of the powder nozzle **115** in relation to the plasma nozzle is very important, because the velocity of the plasma-forming gas is usually many times greater than the velocity of the gas carrying the feedstock material **104,** which mainly determines the angle of incidence of the stream **114,** which in this case connects with the plasma arc **144.**

The first stream **114** can be created using a whole set of nozzles ensuring the appropriate resultant velocity and direction of the stream and the desired distribution of the suspension of the powdered feedstock material **104** in the carrier gas **110.** In the case of using a plasma source as the focused heat source **140,** the first stream **114** can be injected directly into the plasma arc **144** so that the feedstock material **104** heats up already in flight and the powdered feedstock material **104** reaches the sonotrode tip **105** at least partially melted. An analogous solution can be obtained by using a laser heat source.

The selection of the method of exposing the powder to the focused energy source depends mainly on the melting point of the material and its vapor pressure. In a preferred embodiment of the method, materials with a high melting point and/or low vapor pressure, e.g. niobium alloys, are subjected to the action of the focused heat source before hitting the surface of the melt pool, as this increases the efficiency of energy transfer from the focused energy source to the feedstock material. This can be achieved by injecting the powder directly into a plasma arc or a laser beam above the melt pool. Materials with a low melting point and/or high vapor pressure are preferably injected directly into the melt pool, so as not to heat them up beforehand and not to expose them to loss of alloying elements. In order to clean the powder being the atomization product from the residues of plasma processing, it can be washed.

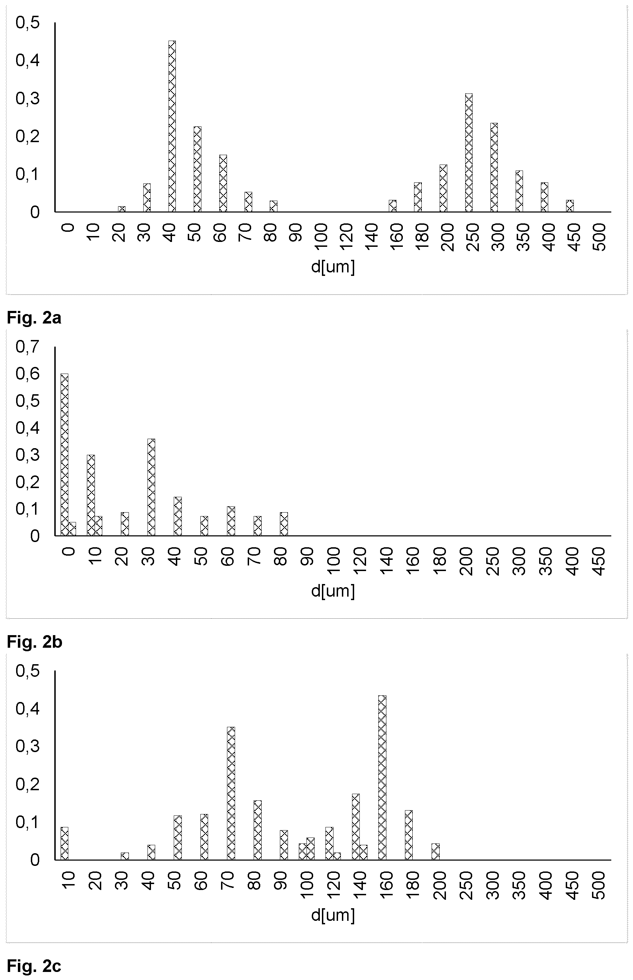

Fig. 2a shows a histogram of the size of the feedstock powder particles **104** (diamond filling on the graph) and a histogram of the size of the atomization product particles using the method according to the first embodiment of the invention discussed above (dotted filling).

In the second embodiment, a blend of powders: Ti, Nb, Ta and Zr with cut below 20 µm was used as the feedstock material, a sonotrode with a working surface **105** made of a TaW10 alloy with a thickness of 5 mm and a thermal insulator made of a TiNb45 alloy with a thickness of 10 mm provided on the molybdenum sonotrode was used, with other parameters unchanged. During melting, the powders melted and alloyed on the surface of the sonotrode **101** and an alloy powder was formed. The method thus allows one to easy obtain alloy powders, which are difficult to obtain by atomization of powders from easily accessible elements. The size of the feedstock material **104** is selected so that the product and the feedstock material **104** can be separated on sieves of different sizes, which facilitates the subsequent separation of these powders into the product and the substrate.

Fig. 2b shows a histogram of the size of the feedstock powder particles **104** (diamond filling on the graph) and a histogram of the size of the atomization product particles using the method according to the second embodiment of the invention discussed above (dotted filling).

In the third embodiment, 5% by weight of TiC with a cut of 5 µm was added to the AlSi12 powder with a cut between 100 µm - 200 µm and the blend obtained in this way was used as the feedstock material **104.** The process was carried out at a plasma arc current reduced to 150 A with the remaining conditions unchanged. The aluminum powder melted and hit the melt pool, creating a blend with unmelted TiC powder, and the resulting blend was atomized. As a result, a composite powder was obtained.

Fig. 2c. shows a histogram of the size of the feedstock powder particles **104** (diamond filling on the graph) and a histogram of the size of the atomization product particles using the method according to the third embodiment of the invention discussed above (dotted filling).

In another embodiment, a mixture of 95% Ar and 5% H2 by volume was used as the plasma-forming gas and 1.2709 steel after the 3D printing process was used as the feedstock material **104,** with other conditions unchanged. As a result, it was observed that the product had an oxygen content lower by 200 ppm than the feedstock material **104.** The use of a gas with reducing properties makes it possible to reduce the oxygen content in the powder, increasing its value.

In yet another embodiment of the invention, a laser source was used as the focused energy source **140.** The use of the laser source **140** has the advantage that the powdered feedstock material **104** processed by the laser is less exposed to evaporation than in the case of plasma arc processing. In addition, it has less contamination with nanoparticles, thanks to which there is no need for additional post-processing treatments, such as washing the powder after the atomization process. The laser viewport into the working chamber can be positioned further from the melt pool **106** than it is possible with a plasma source that provides a limited arc length (typically up to 100 mm). This means that in laser processing, the focused heat source and its associated components are less susceptible to contamination. At the same time, the use of a laser source eliminates contamination of the product with materials originating from wear of the plasma source components, typically tungsten contamination from the electrode. Using a laser as a heat source, it is easy to melt materials with melting point above 1800 K.

In the present embodiment, a laser with a power of 6 kW, a wavelength of 1064 nm and a focal diameter of 30 mm is used with the feed rate of the feedstock material **104** of 20 g/min (twice the powder output than in the case of using a plasma source with half the power) at a powder nozzle angle with respect to the sonotrode axis of 45° and other conditions unchanged.

In another embodiment, a 6 kW laser is used to melt a powder blend of Nb, Hf and Zr in a weight ratio of 89:10:1 with a cut of over 100 µm on a 20 mm diameter sonotrode made of a 5 mm thick C103 alloy diffusion-bonded to a molybdenum sonotrode, the feed rate of the feedstock material being 30 g/min and other conditions unchanged.

In another embodiment, a 4 kW laser is used to melt Ta powder with a cut above 100 µm on a 20 mm diameter sonotrode made of a 20 mm thick TaW10 alloy diffusion-connected to a molybdenum sonotrode, the feed rate of the feedstock material being 5 g/min, the focal diameter of the laser being 20 mm and other conditions unchanged.

In another embodiment of the method, the melt pool **106** is limited by the cooled base **292,** which makes it easier to obtain a concave shape of the melt pool, and the melt pool material does not flow out of the basin formed between the surface of the working tip **105** of the sonotrode **101** and the cooled base **292.** The cooled base **292** also constitutes a physical barrier for solid elements ejected from the melt pool, so that only powder is able to escape from the "basin" formed between the surface of the working tip **105** and the cooled base **292.** In the event of material expulsion, it is melted by the heat source and returned to the melt pool **106.**

The device **100,** the block diagram of which is shown in Fig. 1, is used for atomizing powdered feedstock material **104** using ultrasound in the method according to the invention. In the first embodiment, wherein a plasma arc is used as the heat source, and the plasma nozzle and the powder nozzle are independent elements. The device includes the ultrasonic source **103,** which is an ultrasonic transducer with a capacity of 5.6 nF and a nominal frequency of 40 kHz.

The ultrasonic element is a cylindrical sonotrode 71 mm long and 30 mm in diameter made of a molybdenum alloy and tuned to a frequency of 40500 Hz at the operating temperature. The sonotrode **101** is cooled 30 mm from its tip **105.** The working tip of the sonotrode can be the base of the cylinder. However, better effects are obtained by using a tip **105** made of a material with lower thermal conductivity than the body of the sonotrode **101.** It is then easier to shape the temperature profile.

The powder feeder is a disc feeder routinely used in plasma cladding processes. The powder is fed through the above-mentioned powder nozzle **115** with a diameter of 2 mm directed at an angle of 30° with respect to the axis of the sonotrode **101.**

In the preferred embodiment, the sonotrode **101** with a diameter of 30 mm consists of layers, namely a 5 mm long Ti6Al4V alloy constituting the tip **105** and diffusion-bonded with 65 mm long molybdenum, which is connected to the ultrasound source **103** and cooled. The Ti6Al4V alloy is characterized by a thermal conductivity of 6 W/mK, while the molybdenum alloy used has a conductivity of 90 W/mK. The use of a spacer made of a material with lower conductivity limits the heat transfer to the sonotrode and thus maintaining a liquid melt pool, is possible with a lower power of the focused energy source.

In another embodiment of the device, the sonotrode **101** with a diameter of 30 mm consists of layers, namely 5 mm of molybdenum alloy constituting the tip **105,** diffusion-bonded to 5 mm of TiNb45 alloy, which is diffusion-bonded to 65 mm of molybdenum, which is connected to the ultrasound source. A 65 mm long molybdenum fragment is cooled. The TiNb45 alloy is characterized by a thermal conductivity of 10 W/mK, while the molybdenum alloy used has a conductivity of 90 W/mK. Similarly to the above embodiment, this causes the heat transfer to the sonotrode to be lower, and at the same time the tip **105** is not melted by the feedstock material **104,** which makes it easier to maintain process stability.

The focused heat source **140** is adapted to locally heat and melt the feedstock material. In the present embodiment, a plasma arc is used, but a laser can also be used, as well as hybrid solutions comprising both a focused heat source and auxiliary sources of distributed heat, e.g. an induction heater. As indicated above, both a plasma source and a laser source can be used as the focused heat source **140.**

The device **100** further comprises a working chamber **190,** in which at least partially the ultrasonic element **101** connected to the ultrasonic source **103** is located. The working tip **105** must be accommodated in the chamber.

The person skilled in the art is also able to propose other methods of feeding powder together or separately from the plasma nozzle or another heat source, taking as an example cladding and 3D printing processes. In particular, powder can be injected into the stream of plasma-forming gas. The integration of the plasma nozzle and powder nozzle is advantageous due to its simplicity and the fact that the powder is always injected directly into the plasma arc, which increases the melting efficiency of the feedstock material.

In the preferred embodiment, the feedstock material nozzle **104** may be integrated with the heat source **140,** e.g. by integrating the plasma nozzle **245** and the powder nozzle **115** into a powder-plasma nozzle **215** as shown in Fig. 3a. Such an arrangement feeds the heated feedstock material **104** onto the sonotrode **101** in the form of the first stream **114.** The integrated powder-plasma nozzle is supplied with a mixture of feedstock material **104** and shielding gas **110** from the adjustable powder feeder **113** via four powder channels **115** with a diameter of 2 mm acting as a powder nozzle, and with plasma-forming gas via a plasma-forming gas channel **245** with a diameter of 4 mm. The plasma-forming gas entrains the feedstock material **104** and heats it, so that the first stream **114** contains preheated powder particles, which melt more easily in the melt pool. The working chamber **190** which isolates the atomization process from atmospheric oxygen and protects the operator. According to the embodiment it is constructed on the plan of a cylinder with a diameter of 350 mm and is equipped with a nozzle directing the shielding gas. Such a solution has proven convenient in use, but a person skilled in the art is able to routinely propose other solutions of the working chamber, including those of different dimensions.

The device is further provided with a carrier gas nozzle **120** providing the second stream **124** of carrier gas. The powder nozzle **115** and the carrier gas nozzle **120** are directed so that the first stream **114** and the second stream **124** are directed crosswise to each other - at an acute angle. The present embodiment uses the second stream **124** directed horizontally and the stream **114** which in the vertical plane is directed at an angle of 30° with respect to the horizontal direction. The rough convergence of the directions and orientation of the streams in the horizontal plane (in the range from 0° to 120°) additionally facilitates the collection of atomized powder. At the same time, the powder nozzle **115,** being located on the windward side of the melt pool, is protected from spraying of the atomized material onto it. The carrier gas in the stream **124** is dosed from the reservoir **121.** The dosing is regulated by a control system **122,** which in the simplest case may be a valve.

In the present embodiment, as shown in Fig. 3a, the plasma nozzle **245** and the powder nozzle **115** are integrated into one element - the powder-plasma nozzle **215.**

The device according to the embodiment is provided with a dedicated collector **191** of the powder being the atomization product. The collector may be a flat suction nozzle located downwind of the sonotrode **101.**

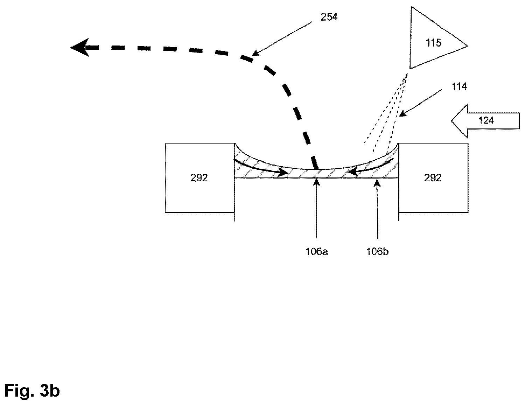

The device further comprises a power control system **142** for the focused heat source **140,** a rate control system **112** for the first stream **114,** the systems being configured such that the melt pool **106** is concave in shape and has two regions, including a shallower region **106a** in which ultrasonic atomization occurs and a deeper region **106b** in which the molten material is collected, the deeper region **106** being at least partially surrounding the first region **106a.** Fig. 3b schematically illustrates the processes occurring at the working tip **105.** The feed rate of the powdered feedstock material **104** is selected so as to achieve a dynamic balance between the feed process and the atomization process. The system **142** may be an adjustable power supply providing adjustable voltage for the laser source or adjustable current for the plasma source arc.

The desired melt pool profile can be obtained by selecting the parameters of the heat source **140** and the direction and rate of the stream **114.** This can be further facilitated by providing cooling of the sides of the melt pool by means of the cooled base **292.** Providing such a base constraining the melt pool **106** and extending above the sonotrode tip **105** is of great help because, when exposed to the first stream **114,** hotter material has a greater tendency to spread to the sides than cooler material. Consequently, by selecting the parameters of the heat source **140** so that the energy is delivered to a greater part of the area of the sonotrode tip **105** (preferably 60% or more), but so that the edges of the melt pool are cooler, regions **106a** and **106b** are obtained which solve the problem of process efficiency. In the embodiment, the cooled base is a 15 mm thick copper plate cooled by flowing water. This is particularly easy when using a laser source as the heat source **140** due to the fact that the power distribution **514** in the laser beam **444** is usually Gaussian and the area affected by the beam can be easily shaped by focusing and defocusing the beam.

Automation of the process can be achieved by using a central unit **150,** e.g. a microcomputer or microcontroller, or a dedicated FPGA system, connected to the system **142** for controlling the power of the focused heat source **140.** An additional facilitation is the use of a more advanced and electronically controlled system **112** for controlling the powder content and the rate of the first stream **114** from the powder feeder **113.** The system **112** may be a special mixer or an arrangement of electrovalves. Such automation enables tuning of both the stream rate and powder content with the system **122** for controlling the carrier gas flow in the stream **124.** The central unit **150** is implemented as a Beckhoff C6640-0060 industrial computer. The parameter change is made based on the image of the working tip and the sonotrode frequency. If more than 60% of the sonotrode area is covered with a melt pool of shallow depth ensuring intensive atomization, more feedstock material **104** is added. If the vibration frequency of the sonotrode **101** drops below the initial one reduced by 500 Hz, the power of the heat source **140** is reduced. Analysis of the melt pool quality and the sonotrode condition is carried out through a viewport, using a camera - not shown in the drawing.

As shown in Fig. 3b, the feedstock material **104** is directed inside the stream **114** to the melt pool. In such a case, a correction for the second stream **124** of shielding gas and any additional streams shaping the melt pool (not shown in the drawing) must be taken into account. The atomized material ejected from the melt pool initially has only a vertical velocity component. However, after entering the stream **124** and the stream **114** reflected from the melt pool surface, the atomization product **254** is led out of the area of the sonotrode tip **105** and its cooled base **292** towards the powder collector **191.**

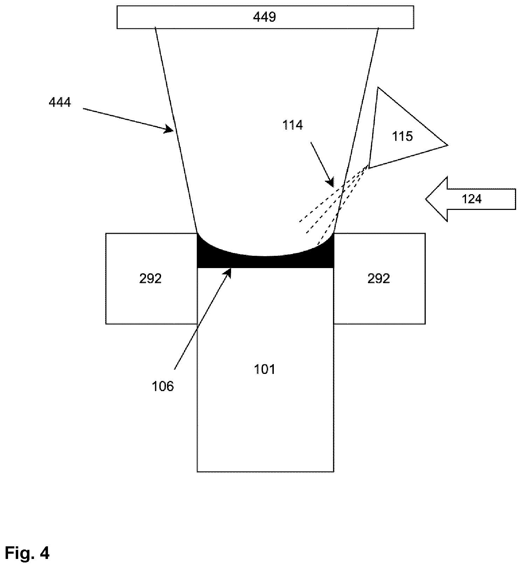

Another embodiment of the invention is discussed with reference to Fig. 4. With reference to the previous embodiment, a laser source is used as the focused energy source and the powder nozzle is redesigned. A laser radiation source is used, which supplies energy to the system in the form of a radiation beam **444** melting the feedstock material supplied in the form of the first stream **114.** The heat source is an Nd:YAG laser with a wavelength of 1064 nm and an optical fiber diameter of 200 µm and adjustable power to a maximum average power value of 6 kW. The laser beam **444** is shaped in such a way that a parallel beam with a diameter of 50 mm is focused by means of a lens with a focal length of 400 mm, with the tip **105** of the sonotrode **101** being located 160 mm from the lens, so that the focus has a diameter approximately equal to the diameter of the sonotrode tip **101.** Thanks to this, the working tip **105** is illuminated with an approximately Gaussian beam having a diameter of 30 mm defined at the boundary of 1/*e*², where e is the maximum beam intensity. A person skilled in the art is able to routinely select a different laser source, taking into account the required system efficiency, the reflectivity of the feedstock material and its form. It should be noted, however, that the indicated source performed best in tests with titanium alloys.

A working chamber **190** with a laser viewport **449** is used, which isolates the atom ization process from atmospheric oxygen and protects the operator from laser radiation. The viewport **449** allows laser radiation to penetrate into the chamber. According to the embodiment, the chamber is constructed on a cylindrical plan with a diameter of 350 mm and is equipped with a cooling jacket and a viewport DN 150 (DIN 11850) made of quartz glass covered with an anti-reflective layer. The viewport **449** is equipped with additional nozzles directing additional carrier gas onto the viewport. The use of additional blowing directly onto the laser viewport **449** while moving it away from the melt pool **106** ensures that particles of the atomized material or the feedstock material **104** do not contaminate the viewport. Otherwise, even slight contamination of the viewport may, over time, locally reduce its transparency and lead to undesirable absorption of laser power. This solution proved convenient to use, but a person skilled in the art is able to routinely propose other solutions for the working chamber and the viewport to prevent contamination. In particular, laser feedthroughs of various shapes and sizes are available to persons skilled in the art. The use of a laser source for atom ization proved to be extremely beneficial, as the material obtained in this way was free of nanoparticles typical of the plasma process originating from partial evaporation of the material being atomized in the plasma stream.

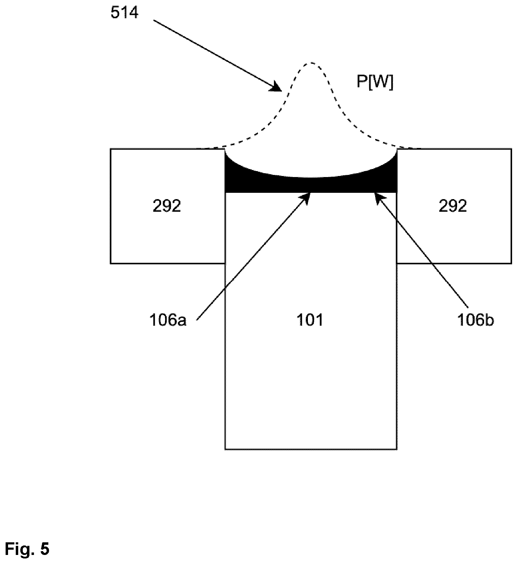

At the same time, laser focused heat sources provide the possibility of easy control of the heated surface by focusing and defocusing the beam, and also have a power density distribution **514** and consequently a heating profile naturally focused on the center of the beam, as shown in Fig. 5. This allows the beam to be focused so that 99% of the heating power is delivered to the surface of the tip **105** of the ultrasonic element **101,** while at the same time the maximum power density is set at the center of the tip **105** in the shallow region **106a** of the melt pool **106.** In such conditions, even without the base **292,** a favorable depth profile can be easily obtained - although with the cooled base **292** it is easier and less precise beam positioning can be afforded. The base **292** provides a natural constrain of the melt pool spreading and allows one to force greater depths in its vicinity. In practice, results significantly better than those obtained with known techniques are obtained when 60% of the source energy is focused on the tip **105** of the ultrasonic element **101.**

In the course of experiments, it was determined that additional facilitation in shaping the melt pool and more effective atomization can be obtained by using a dedicated ultrasonic element in the form of a sonotrode with a tip **105** made of a material with higher thermal conductivity than the material of the sonotrode body **101.** Even better effects were obtained by using three materials, among which both the tip **105** of the sonotrode **101** and its body conducted heat well, but a thin layer of lower thermal conductivity was provided between the tip and the body. It is important to ensure that the tip material has a higher melting point than the feedstock material **104** subjected to atomization. A sonotrode with a sandwich structure, in which two materials with higher thermal conductivity are separated by a layer of material with lower thermal conductivity, proved to be particularly advantageous. For atom ization of titanium with a melting point of 1700° C, a configuration in which the sonotrode tip is made of molybdenum with a melting point of 2400 °C and thermal conductivity of 100 W/mK has proven effective. The tip is separated from the body by a layer of TiNb alloy with a melting point of 2000 C and thermal conductivity of 10 W/mK. The sonotrode body below the TiNb layer is made of molybdenum and is water-cooled. The required heat gradient is then effectively obtained with significantly (even six times lower) power of heat supplied to the sonotrode.

### Industrial applicability of the invention

Recycling powders used in 3D printing is a non-trivial task, which with current technology means that many users store the processed material, waiting for the technology to be developed that allows the material to be recycled back into the production process. Powder manufacturers face a similar challenge, struggling with the lingering stocks of fractions of the size used in 3D printing. Most known atomization technologies, despite significant similarities in terms of apparatus, are not well suited to processing powdered material, and using a powder form to feed the material for re-atomization is either not possible or is an inefficient process due to blowing and mechanical loss of powder. Directly transferring the cladding and 3D printing techniques to the atomization process is inefficient, because they are configured to introduce the powder into a small-sized melt pool, which is inefficient in the case of simultaneous atomization.

Ultrasonic atomization methods using a focused energy source enables the atomization of any liquid, but the use of powder as a feedstock material in a continuous process is difficult because the droplet emission occurs from the same melt pool into which the feedstock material is introduced. For example, the direct use of known 3D printing and cladding methods that use a focused energy source and supplying powder in a gas to conduct the ultrasonic atomization process is impossible because the above processes are characterized by a small melt pool, which, on the one hand, causes erosion of the sonotrode as a result of its atomization, and on the other hand, the efficiency of feeding the feedstock material to the melt pool from which the atomization occurs is low.

As a rule, the shallower the melt pool, the more intensive the ultrasonic atomization process. On the other hand, shallow melt pools do not accept powdered feedstock material well, which results in a decrease in the efficiency of its use. According to the invention, a melt pool with a variable, concave profile is used, thanks to which it includes both a region **106b** that effectively receives powdered feedstock material injected in the form of a stream, and a region **106a** that effectively atomizes.

The shallower the melt pool, the more intense the ultrasonic atomization, but feeding the feedstock material in the form of powder to the place from which ultrasonic atomization occurs is ineffective. The solution is to select the process parameters in such a way that there is a deeper region of the melt pool with low atomization intensity, which is easy to feed with feedstock material in the form of powder.

Feeding powder in the form of a stream suspended in a gas is not precise, especially when using a powder nozzle located far from the melt pool, which is why it is also worth using melt pools with a larger area that is able to accept the feedstock material.

With small melt pool sizes, such as those used in 3D printing techniques, the efficiency of the atomization process understood as the ratio of the mass of atomized powder to the mass of the feedstock material is low due to the need to inject the feedstock material into the melt pool from which atomization occurs.

In the first, shallower region, the atomization rate exceeds the material feed rate, and in the second region, the material feed rate exceeds the atomization rate. This leads to mass transfer of the liquid material in the melt pool **106** from the deeper region **106b** to the shallower region **106a.**

The dominant mechanism of the process is that the feedstock material is injected into the deeper region of the melt pool, then in liquid form flows to the shallower region, where atomization occurs, then drops of the atomized material are entrained by the second gas stream. At the same time, part of the feedstock material falls directly onto the region of the melt pool with a lower depth and is immediately atomized, and in region with a greater depth, negligible atomization occurs. There is no universal critical melt pool depth enabling atomization, and the process itself is stochastic, therefore the boundary between the first shallower region **106a** and the second deeper region **106b** is conventional and dependent on the course of the process. For different materials, this division will be different even with the same melt pool depth profile.

The melt pool of liquid material according to the invention is characterized by properties that are unusual for welding processes, but has unexpectedly advantageous properties in the ultrasonic atomization process. First, the melt pool is concave, which is the result of the simultaneous action of ultrasound, a focused energy source, and a gas stream. The action of ultrasound additionally profiles the melt pool by removing material from places where the melt pool is shallow enough. In addition, ultrasound improves the wettability of the liquid material to the surface, which causes the height of the liquid droplet on the working surface of the sonotrode to decrease. This observation is also confirmed in the literature - among others in Sarasua, Jon Ander, et al. "Energetic study of ultrasonic wettability enhancement." Ultrasonics Sonochemistry 79 (2021): 105768.

A skilled welder, having familiarized himself with this description, is able to select process parameters for various materials, if he starts from the above considerations, to modify the process and his knowledge of phenomena described for welding metals and their alloys. In particular, the skilled person is able to select appropriate techniques for shaping the heating and/or cooling profile of the sonotrode tip as well as for selecting the gas stream rate and powder content to shape the melt pool depth profile in accordance with the instructions.

## Claims

1. A method of atomization of a powdered feedstock material **(104)** comprising following steps, performed simultaneously or alternately:
a step of subjecting said powdered feedstock material **(104)** to melting by heating it with a focused heat source **(140)** to obtain a melt pool **(106)** of liquid feedstock material **(104)** on a tip **(105)** of an ultrasonic element **(101),**
a step of subjecting the melt pool **(106)** to ultrasonic vibrations by means of the vibrating ultrasonic element **(101),**
a step of feeding the powdered feedstock material **(104)** to the melt pool **(106)** in a first stream **(114)** impinging the melt pool **(106)** and containing a carrier gas and the powdered feedstock material **(104)** suspended in said gas,
**characterized in that**
the ultrasonic element **(101)** is cooled and
in the step of subjecting the melt pool **(106)** to ultrasonic vibrations, the ultrasonic vibrations are induced in the melt pool **(106)** by means of the ultrasonic element **(101),** causing the melt pool material **(106)** to be ejected as an atomization product **(254),** whereas
a heating profile **(514)** of the focused heat source **(140)** and/or a cooling profile of the melt pool **(106)** and/or a gas blowing profile onto the melt pool **(106)** and/or the feed rate of the feedstock material **(104)** are selected so that
the melt pool **(106)** is concave in shape and has two regions, including a shallower region **(106a)** in which the ultrasonic atomization rate exceeds the feed rate of the feedstock material and a deeper region **(106b)** in which the feed rate of the feedstock material exceeds the atomization rate, and
the atomization product **(254)** ejected from the melt pool **(106)** is collected using the second gas stream **(124).**

2. The method of claim 1 wherein a blend of powders of different chemical composition is used as the feedstock material **(104).**

3. The method of claim 1 wherein the atomization is carried out in an atmosphere with reducing properties.

4. The method according to claim 1 wherein the depth of the shallower region **(106a)** of the melt pool **(106)** is less than 2 mm and the depth of the deeper region **(106b)** of the melt pool **(106)** is greater than 3 mm.

5. The method according to any of claims 1 to 4 wherein the first stream **(114)** is directed at an angle of 30° to 80° with respect to the second stream **(124)** of gas.

6. The method according to any of claims 1 to 5 wherein the first stream **(114)** is formed by means of a set of nozzles directed at different angles.

7. The method according to any of claims 1 to 6 **characterized in that** a plasma source or a laser source is used as the focused energy source **(140).**

8. The method according to any of claims 1 to 7 **characterized in that** the power of the focused heat source is set to be greater than the heat flux passing from the tip **(105)** to the ultrasonic element **(101)** at the temperature of the tip **(105)** equal to the melting point of the feedstock material **(104).**

9. The method according to any of claims 1 to 8 **characterized in that** the powdered feedstock material **(104)** suspended in the first stream **(114)** is heated before being supplied to the melt pool **(106).**

10. The method according to any of claims from 1 to 9 **characterized in that** the melt pool on the tip **(105)** of the vibrating element **(101)** is constrained on the sides by a cooled base **(292).**

11. A device **(100)** for ultrasound atomization of powdered feedstock material **(104)** comprising an ultrasonic source **(103),** an ultrasonic element **(101)** connected to the ultrasonic source **(103),** and a focused heat source **(140)** adapted to locally heat and melt the feedstock material **(104)** and form a melt pool **(106)** on the surface on a tip **(105)** of the cooled ultrasonic element **(101),** wherein
the device further comprises a working chamber **(190)** accommodating, at least partially, the ultrasonic element **(101)** connected to the ultrasonic source **(103),** and a system for feeding the powdered feedstock material **(104)** to the ultrasonic element **(101)** in the form of the first stream **(114),**
**characterized in that**
the device comprises a cooling system for the ultrasonic element **(101),**
the device is further provided with a gas inlet **(120)** providing the second stream **(124)** of carrier gas,
wherein the nozzle **(115)** and the gas inlet **(120)** are oriented such that the first stream **(114)** and the second stream **(124)** are directed crosswise to each other, and
the device further comprises a collector **(191)** of an atomization product **(254),** a system **(142)** for controlling the power of the focused heat source **(140),** a system **(112)** for controlling the rate of the first stream **(114),** wherein these systems are configured so that the melt pool **(106)** is concave in shape and has two regions, including a shallower region **(106a)** in which the ultrasonic atomization rate exceeds the feed rate of the feedstock material and a deeper region **(106b)** in which the feed rate of the feedstock material exceeds the atomization rate.

12. The device according to claim 11, which comprises a cooled base **(292)** extending above the surface of the tip **(105)** of the ultrasonic element **(101).**

13. The device according to claim 11 or 12 **characterized in that** it comprises a central unit **(150)** connected to the system **(142)** for controlling the power of the focused heat source and to the system **(112)** for controlling the rate of the first stream **(114)** and adapted to send control signals thereto.

14. The device according to claim 11 or 12 or 13 **characterized in that** the ultrasonic element **(101)** has a vibrating body and a tip **(105)** insulated from said vibrating body using a material with lower thermal conductivity than the material of the body of the ultrasonic element **(101).**

15. The device according to any of claims 11 to 14 **characterized in that** the cooled base **(292)** is in contact with the ultrasonic element **(101).**
